# EUROPÄISCHE PATENTSCHRIFT

(11) **EP 2 009 834 B1**
(45) Veröffentlichungstag und Bekanntmachung des Hinweises auf die Patenterteilung: **09.10.2013**
(21) Anmeldenummer: 08157454.3
(22) Anmeldetag: 03.06.2008
(51) Int. Cl.: H04L 1/00

(54) **Adaptiver Fehlerzähler für ein drahtloses Feldgerät**
Adaptive error counter for a wireless field device
Compteur d'erreurs adaptable pour un dispositif de terrain sans fil

(30) Priorität: 27.06.2007 DE 102007029660; 27.06.2007 US 946416 P
(43) Veröffentlichungstag der Anmeldung: 31.12.2008
(73) Patentinhaber: VEGA Grieshaber KG, 77709 Wolfach (DE)
(72) Erfinder: Isenmann, Andreas, 77716, Haslach (DE)
(74) Vertreter: Kopf, Korbinian Paul

(56) Entgegenhaltungen:
- EP-A1- 1 447 969
- WO-A1-96/18251
- WO-A1-2006/089760
- WO-A2-99/01944
- WO-A2-2004/047043
- US-A- 5 271 011
- US-A- 5 463 639

## Beschreibung

### Technisches Gebiet:

Die vorliegende Erfindung betrifft die Füllstandsmessung und die Druckmessung. Insbesondere betrifft die vorliegende Erfindung ein System und ein Verfahren zum Messen eines Füllstands oder eines Drucks.

### Hintergrund der Erfindung:

Bei einer drahtgebundenen digitalen Kommunikation gibt es sog. Retry-Zähler. Diese Retry-Zähler bestimmen, wie oft ein Telegramm wiederholt wird, bevor die Kommunikation als gestört angesehen wird.

Für jede Kommunikationsart wird heute ein Kompromiss zwischen der Anzahl tolerierbarer fehlerhafter Einzelkommunikationen und erforderlicher Reaktionszeit auf eine auftretende Kommunikationsstörung getroffen und in Form eines festen Retry-Zählers in der Firmware oder als variabel voreinstellbarer Retry --- Zähler implementiert. Während der Laufzeit des Systems wird dieser Zähler vom System selbst nicht geändert.

Der erforderliche bzw. tolerierbare Retry-Zähler muss ermittelt werden und wird dann fest vorgegeben.

WO 99/01944 beschreibt ein Verfahren und eine Vorrichtung zur Steuerung der Sendeleistung in einem Kommunikationssystem. Es ist ein Leistungsschwellwert vorgesehen, der zwei verschiedene Werte einnehmen kann, je nachdem, ob die Datenübertragungsrate hoch oder niedrig ist.

WO 2004/047043 A2 beschreibt ein Füllstandmessgerät, welches mit einer Steuereinheit drahtlos kommunizieren kann.

WO 2006/089760 A1 beschreibt ein Feldbussystem zur drahtlosen Kommunikation, welches für die Füllstandmessung verwendet wird.

Es ist eine Aufgabe der vorliegenden Erfindung, eine verbesserte Fehlerdetektion für drahtlos kommunizierende Feldgeräte anzugeben.

Es ist ein System und ein Verfahren zum Messen eines Füllstands oder eines Drucks gemäß den Merkmalen der unabhängigen Ansprüche angegeben.

Die dargestellten Ausführungsbeispiele der Erfindung betreffen gleichermaßen das System und das Verfahren zum Messen eines Füllstands oder eines Drucks.

### Darstellung der Erfindung:

Gemäß einem Ausführungsbeispiel der vorliegenden Erfindung ist ein System angegeben, das eine Steuereinheit und ein Feldgerät zum Messen eines Füllstands oder eines Drucks aufweist, welches zur drahtlosen Kommunikation mit der Steuereinheit ausgeführt ist, wobei die Steuereinheit einen adaptiven Fehlerzähler zum Detektieren einer Anzahl an fehlerhaft empfangenen Datenpaketen aufweist, wobei der adaptive Fehlerzähler einen adaptiven Schwellwert aufweist, der einem Vergleich mit der detektierten Anzahl an fehlerhaft empfangenen Datenpaketen dient; und
wobei der Schwellwert während des Betriebs des Systems dynamisch in Abhängigkeit von einer Signallaufzeit, einer gemessenen Signalstärke oder einer ermittelten Distanz zwischen dem Feldgerät und der Steuereinheit angepasst wird.

In anderen Worten kann die Steuereinheit die Anzahl an fehlerhaft empfangenen Datenpaketen aufsummieren. Diese Summe wird dann mit dem Schwellwert verglichen. Je nach Anforderungen und/oder äußeren Bedingungen wird der Schwellwert entsprechend angepasst. Diese Schwellwertanpassung erfolgt automatisch, beispielsweise in Abhängigkeit von der Laufzeit der übertragenen Datenpakete (also in Abhängigkeit von der Länge der Kommunikationsstrecke).

Die Schwellwertanpassung kann aber beispielsweise auch anhand der gemessenen Signalstärke der drahtlosen Kommunikation erfolgen. Ebenso ist es möglich, die Schwellwertanpassung anhand der gemessenen Distanz zwischen den an der Kommunikation beteiligten Geräte vorzunehmen. Die Distanz zwischen den Kommunikationsgeräten kann hierbei in einer ersten Ausführung direkt über ein Distanzmessgerät ermittelt werden.

Gemäß einem weiteren Ausführungsbeispiel der vorliegenden Erfindung kann jedes Kommunikationsgerät die eigene Position beispielsweise über einen eingebauten GPS - Empfänger ermitteln. Die Distanz zwischen den Geräten wird dann ermittelt, indem ein Gerät die Position vom anderen Gerät über die Kommunikationsstrecke abfragt und mit der eigenen Position verrechnet. Somit kann also eine Anpassung der Anzahl erlaubter, aufeinander folgender fehlerhafter Telegramme an die Reichweite der drahtlosen Kommunikationsstrecke erfolgen. Die Anpassung kann dynamisch während der Laufzeit des Gesamtsystems durchgeführt werden.

Ein Datenpaket besteht immer aus einem Anfragetelegramm und einem darauf folgenden Antworttelegramm. Als Ursache für ein fehlerhaft empfangenes Datenpaket kommt sowohl ein unvollständig empfangenes Anfrage- oder Antworttelegramm oder ein vollständig ausbleibendes Antworttelegramm in Frage. Ob ein Anfrage- oder Antworttelegramm vollständig empfangen wurde kann sowohl durch eine Telegrammlängenangabe im Telegramm selbst, als auch oder zusätzlich durch eine CRC - Prüfung, also eine zyklische Redundanzprüfung (cyclic redundancy check) gewährleistet werden. Nur korrekt und vollständig empfangene Anfragetelegramme werden auch beantwortet, so dass ein fehlerhaft empfangenes Anfragetelegramm zum Ausbleiben des Antworttelegramms führt.
Gemäß einem weiteren Ausführungsbeispiel der vorliegenden Erfindung ist der adaptive Fehlerzähler zur Ausgabe einer Störungsmeldung ausgeführt, wenn die Anzahl an fehlerhaft empfangenen Datenpaketen den Schwellwert übersteigt.

Die fehlerhaft empfangenen Datenpakete werden also gezählt, und wenn zu viele fehlerhafte Datenpakete eingetroffen sind, wird beispielsweise Alarm ausgelöst oder eine andere Fehlermeldung abgesetzt.

Diese abgesetzte Fehlermeldung kann beispielsweise an das entsprechende Sendegerät übertragen werden, welches daraufhin z. B. die Sendeintensität erhöht, eine andere Maßnahme trifft, um die Sendequalität zu verbessern, oder die Fehlermeldung einfach dokumentiert. Dies kann vollautomatisch erfolgen. Der Eingriff eines Benutzers ist hierfür nicht erforderlich. Das Empfangsgerät selbst geht bei zu vielen fehlerhaft empfangenen Datenpaketen in den sicheren Zustand und meldet die vorliegende Kommunikationsstörung auf diese Weise beispielsweise einem übergeordneten Leitsystem.

Während des Normalbetriebs des Feldgerätes kann eine ständige Anpassung des Schwellwertes auf die momentanen Bedingungen erfolgen. Beispielsweise kann es sein, dass zu einem bestimmten Zeitpunkt eine gesteigerte Robustheit gegen Störungen erforderlich ist. Um dies zu erreichen, kann der Schwellwert entsprechend hochgesetzt werden. Wird hingegen zu einem anderen Zeitpunkt eine sensitivere Fehlererkennung gefordert, kann der Schwellwert entsprechend herabgesetzt werden.

Gemäß einem weiteren Ausführungsbeispiel der vorliegenden Erfindung erfolgt die Änderung des adaptiven Schwellwertes automatisch. Ein benutzerseitiger Eingriff ist nicht erforderlich.

Gemäß einem weiteren Ausführungsbeispiel der vorliegenden Erfindung ist die Steuereinheit zur Bestimmung des adaptiven Schwellwertes auf Basis von Informationen, die von einem Benutzer bereitgestellt werden, ausgeführt. Beispielsweise bekommt das System vom Anwender die Vorgabe, wie tolerant das System arbeiten soll. Dies kann beispielsweise durch eine Auswahl der Form "kurze Funkreichweite", "mittlere Funkreichweite" oder "große Funkreichweite" geschehen.

Gemäß einem weiteren Ausführungsbeispiel der vorliegenden Erfindung ist die Steuereinheit zur selbstständigen Bestimmung des adaptiven Schwellwertes innerhalb vorgegebener Grenzwerte auf Basis einer statischen Auswertung der Qualität einer laufenden Funkkommunikation ausgeführt.

Das System ermittelt sich den Wert innerhalb von vorgegebenen Grenzwerten selbst, indem eine statistische Auswertung der laufenden Kommunikation durchgeführt wird. Diese Auswertung kann durch einen im Gerät integrierten Zähler ermöglicht werden, der Langzeitbeobachtungen durchführt. Kommt es statisch zu vermehrten Funkstörungen, wird das System beispielsweise automatisch toleranter, indem der Schwellwert entsprechend heraufgesetzt wird. Eine solche automatische Nachjustierung des Schwellwerts kann beispielsweise aufgrund sich ändernder Umweltbedingungen wie Regen, Schneefall, unterschiedlicher Bewuchs von Laubbäumen durch die Jahreszeiten oder atmosphärischen Störungen erforderlich sein.

Auch kann eine Schwellwertnachjustierung aufgrund der gemessenen Historie der Funk-Übertragung (ggf. gepaart mit einer erfolgten Fehlerauswertung) erfolgen. So kann zum Beispiel der Schwellwert im Winter ein anderer sein als im Sommer. Oder es kann der eingestellte Schwellwert zu Zeiten erhöhten Funkverkehrs ein anderer sein als zu Zeiten, an denen im Normalfall wenig störender externer Funkverkehr stattfindet.

Gemäß einem weiteren Ausführungsbeispiel der vorliegenden Erfindung ist die Steuereinheit zur Bestimmung des adaptiven Schwellwertes auf Basis einer messbaren Größe der Funkkommunikation ausgeführt.

Das System benutzt beispielsweise als messbare Größe das sog. RSSI (Signalstärke), um die Toleranz bezüglich der Kommunikationsstörung zu setzen.

RSSI ist die Abkürzung für "Received Signal Strength Indication" und stellt einen Indikator für die Empfangsfeldstärke kabelloser Kommunikationsanwendungen dar.

Dieser Indikator kann also von der Sende- und Empfangseinheit verwendet werden, um einen für die Kommunikation brauchbaren Kanal zu finden bzw. um einen sinnvollen Schwellwert für die Fehlererkennung einzustellen. Falls nun die Signalstärke unter eine bestimmte Mindeststärke fällt, kann der Schwellwert entsprechend vergrößert werden, so dass eine erhöhte Anzahl von Übertragungswiederholungen stattfinden kann, bevor die Übertragung als fehlerhaft eingestuft wird.

Gemäß einem weiteren Ausführungsbeispiel der vorliegenden Erfindung umfasst die detektierte Anzahl an fehlerhaft empfangenen Datenpaketen nur Datenpakete, die von der Steuereinheit zeitlich aufeinander folgend empfangen wurden.

Gemäß einem weiteren Ausführungsbeispiel der vorliegenden Erfindung ist das Feldgerät als Füllstandradar ausgeführt.

Weiterhin ist ein Verfahren zum Messen eines Füllstands oder eines Drucks angegeben, bei welchem eine Anzahl von fehlerhaft empfangenen Datenpaketen detektiert wird und ein Vergleich der detektierten Anzahl an fehlerhaft empfangenen Datenpaketen mit einem adaptiven Schwellwert durchgeführt wird, wobei die Datenpakete über eine Kommunikationsstrecke drahtlos empfangen werden.

Gemäß einem weiteren Ausführungsbeispiel der vorliegenden Erfindung umfasst das Verfahren weiterhin die Ausgabe einer Störungsmeldung, wenn die Anzahl an fehlerhaft empfangenen Datenpaketen den Schwellwert übersteigt.

Im Folgenden werden mit Verweis auf die Figuren bevorzugte Ausführungsbeispiele der vorliegenden Erfindung beschrieben.

### Kurze Beschreibung der Zeichnungen :

Fig. 1 zeigt eine schematische Darstellung einer Sende- und Empfangseinheit mit einem Feldgerät gemäß einem Ausführungsbeispiel der vorliegenden Erfindung, wobei die Sende- und Empfangseinheit in drahtloser Kommunikation mit einer Steuereinheit steht.

Fig. 2 zeigt eine schematische Darstellung einer Sende- und Empfangseinheit gemäß einem weiteren Ausführungsbeispiel der vorliegenden Erfindung, wobei die Sende-und Empfangseinheit an ein Füllstandsmessgerät angeschlossen ist und ebenfalls in drahtloser Kommunikation mit einer Steuereinheit steht.

Fig. 3 zeigt ein Flussdiagramm eines Verfahrens gemäß einem weiteren Ausführungsbeispiel der vorliegenden Erfindung.

### Detaillierte Beschreibung von exemplarischen Ausführungsformen :

Die Darstellungen in den Figuren sind schematisch und nicht maßstäblich.

In der folgenden Figurenbeschreibung werden für die gleichen oder ähnlichen Elemente die gleichen Bezugszeichen verwendet.

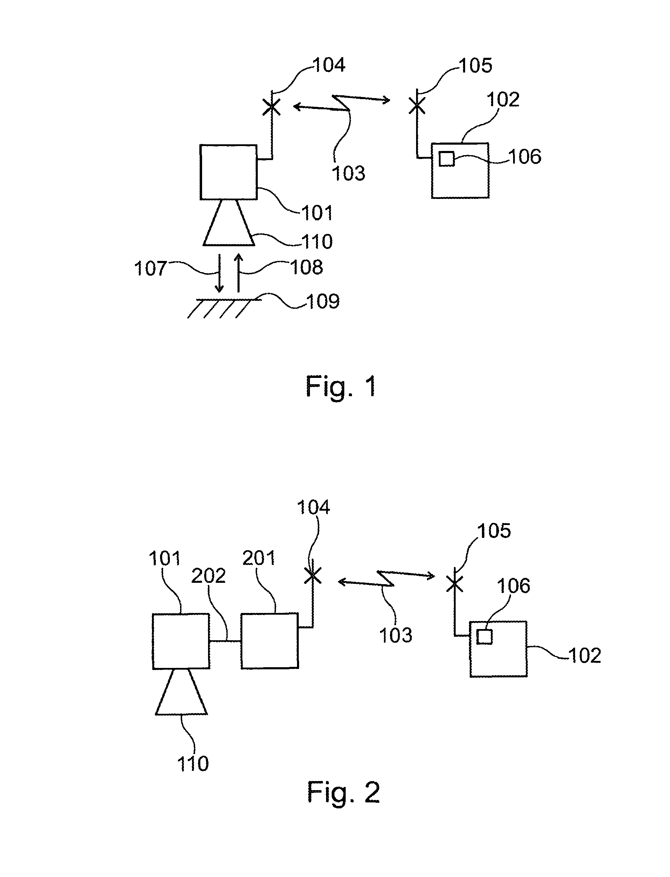

Fig. 1 zeigt eine schematische Darstellung einer Sende- und Empfangseinheit 104, welche in einem Feldgerät 101 integriert ist.

Bei dem Feldgerät handelt es sich um ein Füllstandsmessgerät, beispielsweise ein Füllstandradar. Es kann sich aber auch beispielsweise um ein Druckmessgerät handeln. Das Feldgerät 101 weist eine Antenne 110 auf, welche zum Aussenden elektromagnetischer Strahlen 107 in Richtung einer Füllgutoberfläche 109 ausgeführt ist. Auf der Füllgutoberfläche 109 werden die elektromagnetischen Wellen reflektiert und als Empfangssignal 108 von der Antenne 110 detektiert.

Die Sende- und Empfangseinheit 104 weist beispielsweise eine Funkschnittstelle auf, welche über die Kommunikationsstrecke 103 digitale Daten mit einer entsprechenden Funkschnittstelle 105 einer Basisstation 102 oder Steuereinheit 102 austauscht. Die Steuereinheit 102 weist einen adaptiven Fehlerzähler 106 auf. Der adaptive Fehlerzähler detektiert die Anzahl von fehlerhaft empfangenen Datenpaketen.

Die Kommunikation zwischen dem Feldgerät 101 und der Steuereinheit 102 erfolgt beispielsweise auf digitalem Wege. Bei dieser digitalen Kommunikation wird die Anzahl aufeinander folgender, fehlerhafter Telegramme dazu benutzt, die Kommunikation als gestört anzusehen. Wird diese Anzahl mit einem hohen Wert initialisiert, ist die Kommunikation gegen Störungen robuster. Tatsächliche Störungen, wie beispielsweise ein Ausfall vom Feldgerät 101, werden jedoch erst später (langsamer) als Fehler erkannt. Wird die Anzahl mit einem niederen Wert initialisiert, führen einzelne Kommunikationsstörungen bereits zum Erkennen der Störung.

Gemäß einem Aspekt der vorliegenden Erfindung wird die Anzahl erlaubter, aufeinander folgender fehlerhafter Telegramme an die Reichweite der drahtlosen Kommunikationsstrecke angepasst. Diese Anpassung erfolgt beispielsweise dynamisch während der Laufzeit des Gesamtsystems.

In anderen Worten erfolgt eine automatische Anpassung des Retry-Zählers beispielsweise in Abhängigkeit von der Signallaufzeit, der gemessenen Signalstärke oder der ermittelten Distanz.

Fig. 2 zeigt eine schematische Darstellung eines Füllstandsmessgerät mit einer Sende- und Empfangseinheit gemäß einem weiteren Ausführungsbeispiel der vorliegenden Erfindung. Das Füllstandsmessgerät 101 ist über eine Datenleitung 202 an die Sende- und Empfangseinheit 201, 104 angeschlossen. Die Sende- und Empfangseinheit ist also nicht im Füllstandsmessgerät 101 integriert.

Dadurch, dass die Anzahl tolerierbarer fehlerhafter Telegramme zur Laufzeit angepasst werden kann, kann bei der drahtlosen Kommunikation je nach zu überbrückender Entfernung grundsätzlich ein optimaler Retry-Zähler verwendet werden.

Bei einer kurzen Entfernung sind normalerweise keine systembedingten Kommunikationsstörungen zu erwarten und der Retry-Zähler (Fehlerzähler 106) kann auf einen niederen Wert eingestellt werden, so dass der Ausfall eines Geräts auch schnell erkannt werden kann.

Bei einer größeren Entfernung zwischen der Sende- und Empfangseinheit 201, 104 und dem Steuergerät bzw. der Basisstation 102, 105, 106 kann davon ausgegangen werden, dass ggf. vereinzelt Telegramme nicht korrekt empfangen werden und der Retry-Zähler 106 kann auf einen höheren Schwellwert eingestellt werden. Dies kann dazu führen, dass der Ausfall eines Geräts später erkannt wird.

Die Anzahl tolerierbarer fehlerhafter Telegramme oder Datenpakete ist also nicht als Konstante realisiert, sondern als adaptiver Parameter. Dieser Wert kann in Abhängigkeit der Laufzeit geändert werden.

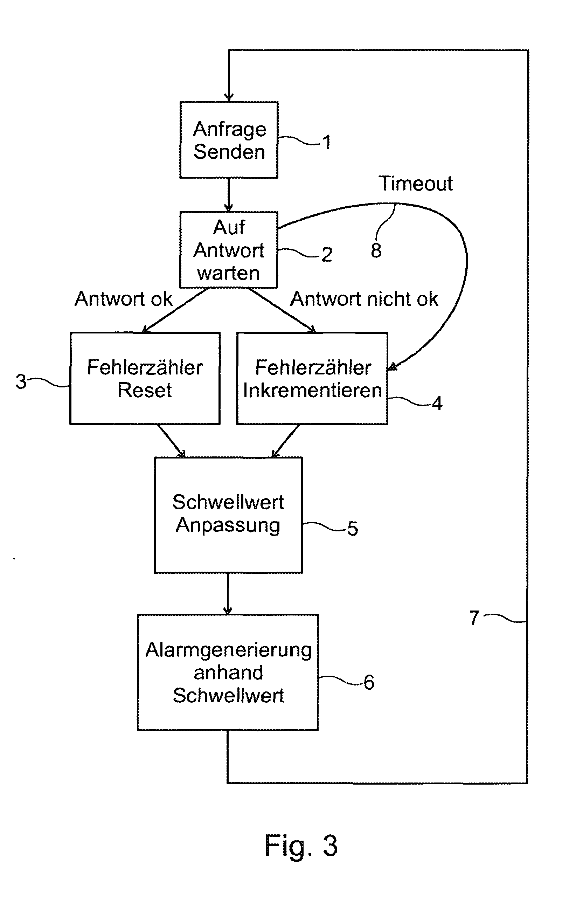

Fig. 3 zeigt ein Flussdiagramm eines Verfahrens gemäß einem Ausführungsbeispiel der vorliegenden Erfindung.

Zunächst wird in Schritt 1 ein Anfragetelegramm versendet. Danach wird in Schritt 2 auf das Antworttelegramm gewartet. Wird dieses innerhalb einer geforderten Zeit korrekt empfangen, wird der Fehlerzähler in Schritt 3 zurück gesetzt (Reset). Ansonsten wird der Fehlerzähler in Schritt 4 inkrementiert (falls die Antwort nicht ok ist oder innerhalb eines bestimmten Zeitintervalls keine Antwort erfolgt (sog. Timeout, Schritt 8)). Im nächsten Schritt 5 wird der Schwellwert für den Fehlerzähler angepasst. Dies kann beispielsweise durch die statistische Auswertung der maximalen Fehlerzähler der letzten 1000 Kommunikationen oder durch Auswertung einer Messgröße wie dem RSSI erfolgen. Abschließend wird in Schritt 6 der aktuelle Fehlerzähler mit dem Schwellwert verglichen und gegebenenfalls ein Alarm ausgelöst. Danach kann wieder eine erneute Anfrage gesendet werden (Schritt 7).

Ergänzend sei darauf hinzuweisen, dass _{"}umfassend" keine anderen Elemente oder Schritte ausschließt und _{"}eine" oder _{"}ein" keine Vielzahl ausschließt. Ferner ist darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkungen anzusehen.

## Patentansprüche

1. System, aufweisend:
eine Steuereinheit (102);
ein Feldgerät (101) zum Messen eines Füllstands oder eines Drucks, welches zur drahtlosen Kommunikation mit der Steuereinheit ausgeführt ist; wobei die Steuereinheit (102) einen adaptiven Fehlerzähler (106) zum Detektieren einer Anzahl an fehlerhaft empfangenen Datenpaketen aufweist;
wobei der adaptive Fehlerzähler (106) einen adaptiven Schwellwert aufweist, der einem Vergleich mit der detektierten Anzahl an fehlerhaft empfangenen Datenpaketen dient; und
wobei der Schwellwert während des Betriebs des Systems dynamisch in Abhängigkeit von einer Signallaufzeit, einer gemessenen Signalstärke oder einer ermittelten Distanz zwischen dem Feldgerät und der Steuereinheit angepasst wird.

2. System nach Anspruch 1,
wobei der adaptive Fehlerzähler zur Ausgabe einer Störungsmeldung ausgeführt ist, wenn die Anzahl an fehlerhaft empfangenen Datenpaketen den Schwellwert übersteigt.

3. System nach einem der vorhergehenden Ansprüche,
wobei die Änderung des adaptiven Schwellwertes automatisch erfolgt.

4. System nach einem der vorhergehenden Ansprüche,
wobei die Steuereinheit zur Bestimmung des adaptiven Schwellwertes auf Basis von Informationen, die von einem Benutzer bereitgestellt werden, ausgeführt ist.

5. System nach einem der vorhergehenden Ansprüche,
wobei die Steuereinheit zur selbständigen Bestimmung des adaptiven Schwellwertes innerhalb vorgegebener Grenzwerte auf Basis einer statistischen Auswertung einer Qualität einer laufenden Funkkommunikation ausgeführt ist.

6. System nach einem der vorhergehenden Ansprüche,
wobei die Steuereinheit zur Bestimmung des adaptiven Schwellwertes auf Basis einer messbaren Größe der Funkkommunikation ausgeführt ist.

7. System nach einem der vorhergehenden Ansprüche,
wobei die detektierte Anzahl an fehlerhaft empfangenen Datenpaketen nur Datenpakete umfasst, die von der Steuereinheit zeitlich aufeinander folgend empfangen wurden.

8. System nach einem der vorhergehenden Ansprüche,
wobei das Feldgerät ein Füllstandradar ist.

9. Verfahren zum Messen eines Füllstands oder eines Drucks durch ein System, das Verfahren aufweisend die folgenden Schritte:
Detektieren einer Anzahl an fehlerhaft empfangenen Datenpaketen;
Vergleich der detektierten Anzahl an fehlerhaft empfangenen Datenpaketen mit einem adaptiven Schwellwert;
wobei die Datenpakete über eine Kommunikationsstrecke drahtlos empfangen werden;
wobei der Schwellwert während des Betriebs des Systems dynamisch in Abhängigkeit von einer Signallaufzeit, einer gemessenen Signalstärke oder einer ermittelten Distanz zwischen dem Feldgerät und der Steuereinheit angepasst wird.

10. Verfahren nach Anspruch 9, weiterhin aufweisend den Schritt:
Ausgabe einer Störungsmeldung, wenn die Anzahl an fehlerhaft empfangenen Datenpaketen den Schwellwert übersteigt.

## Claims

1. System comprising:
a control unit (102);
a field device (101) for measuring a filling level or a pressure, which device is configured for wireless communication with the control unit;
wherein the control unit (102) comprises an adaptive error counter (106) for detecting a number of defectively received data packets;
wherein the adaptive error counter (106) has an adaptive threshold value which is used for comparison with the detected number of defectively received data packets; and
wherein the threshold value is dynamically adjusted during operation of the system on the basis of a signal propagation time, a measured signal strength or a detected distance between the field device and the control unit.

2. System according to claim 1, wherein the adaptive error counter is configured for outputting a fault message when the number of defectively received data packets exceeds the threshold value.

3. System according to any of the preceding claims, wherein the adaptive threshold value is changed automatically.

4. System according to any of the preceding claims, wherein the control unit is configured for determining the adaptive threshold value on the basis of information which is provided by a user.

5. System according to any of the preceding claims, wherein the control unit is configured for independently determining the adaptive threshold value within predetermined limiting values on the basis of a statistical evaluation of a quality of an ongoing radio communication.

6. System according to any of the preceding claims, wherein the control unit is configured for determining the adaptive threshold value on the basis of a measurable variable of the radio communication.

7. System according to any of the preceding claims, wherein the detected number of defectively received data packets comprises only data packets which were received successively by the control unit.

8. System according to any of the preceding claims, wherein the field device is a filling level radar.

9. Method for measuring a filling level or a pressure by means of a system, the method comprising the following steps:
detecting a number of defectively received data packets;
comparing the detected number of defectively received data packets with an adaptive threshold value;
wherein the data packets are received wirelessly via a communication path;
wherein the threshold value is dynamically adjusted during operation of the system on the basis of a signal propagation time, a measured signal strength or a detected distance between the field device and the control unit.

10. Method according to claim 9, further comprising the step of:
outputting a fault message when the number of defectively received data packets exceeds the threshold value.

## Revendications

1. Système, comprenant :
une unité de commande (102) ;
un appareil de champ (101) pour la mesure d'un niveau ou d'une pression, lequel est réalisé pour la communication sans fil avec l'unité de commande ; l'unité de commande (102) présentant un compteur d'erreurs adaptatif (106) pour la détection d'un nombre de paquets de données incorrects reçus ;
le compteur d'erreurs adaptatif (106) présentant une valeur de seuil adaptative, qui sert à une comparaison avec le nombre détecté de paquets de données incorrects reçus ; et
la valeur de seuil étant adaptée dynamiquement, pendant le fonctionnement du système, en fonction d'une durée de propagation des signaux, d'une intensité mesurée des signaux, ou d'une distance déterminée entre l'appareil de champ et l'unité de commande.

2. Système selon la revendication 1,
le compteur d'erreurs adaptatif étant réalisé pour la sortie d'un signal de dérangement, lorsque le nombre de paquets de données incorrects reçus dépasse la valeur de seuil.

3. Système selon l'une des revendications précédentes,
la modification de la valeur de seuil adaptative s'effectuant automatiquement.

4. Système selon l'une des revendications précédentes,
l'unité de commande étant réalisée pour la détermination de la valeur de seuil adaptative sur la base d'informations, fournies par un usager.

5. Système selon l'une des revendications précédentes,
l'unité de commande étant réalisée pour la détermination automatique de la valeur de seuil adaptative à l'intérieur de valeurs limites prédéfinies, sur la base d'une évaluation statistique d'une qualité d'une radiocommunication en cours.

6. Système selon l'une des revendications précédentes,
l'unité de commande étant réalisée pour la détermination de la valeur de seuil adaptative sur la base d'une grandeur mesurable de la radiocommunication.

7. Système selon l'une des revendications précédentes,
le nombre détecté de paquets de données incorrects reçus ne comprenant que des paquets de données, qui ont été reçus successivement dans le temps par l'unité de commande.

8. Système selon l'une des revendications précédentes,
l'appareil de champ étant un radar de niveau.

9. Procédé de mesure d'un niveau ou d'une pression par un système, le procédé comprenant les étapes suivantes :
détection d'un nombre de paquets de données incorrects reçus ;
comparaison du nombre détecté de paquets de données incorrects reçus avec une valeur de seuil adaptative ;
les paquets de données étant reçus sans fil à travers une ligne de communication ;
la valeur de seuil étant adaptée dynamiquement, pendant le fonctionnement du système, en fonction d'une durée de propagation des signaux, d'une intensité mesurée des signaux, ou d'une distance déterminée entre l'appareil de champ et l'unité de commande.

10. Procédé selon la revendication 9, comprenant en outre l'étape :
sortie d'un signal de dérangement, lorsque le nombre de paquets de données incorrects reçus dépasse la valeur de seuil.
